# EUROPÄISCHE PATENTSCHRIFT

(11) **EP 3 936 011 B1**
(45) Veröffentlichungstag und Bekanntmachung des Hinweises auf die Patenterteilung: **14.02.2024**
(21) Anmeldenummer: 21182802.5
(22) Anmeldetag: 30.06.2021
(51) Int. Cl.: A47J 36/24, A47J 37/06

(54) **SCHMELZVORRICHTUNG ZUM SCHMELZEN EINES KÄSES**
MELTING DEVICE FOR MELTING CHEESE
DISPOSITIF DE FUSION PERMETTANT DE FONDRE UN FROMAGE

(30) Priorität: 09.07.2020 DE 202020103971 U
(43) Veröffentlichungstag der Anmeldung: 12.01.2022
(73) Patentinhaber: Uttenweiler GmbH, 88326 Aulendorf (DE)
(72) Erfinder: Uttenweiler, André, 88326 Aulendorf (DE)
(74) Vertreter: Weidner Stern Jeschke

(56) Entgegenhaltungen:
- WO-A1-95/14416
- CH-A- 495 140
- KR-B1- 101 616 649

## Beschreibung

Die Erfindung betrifft eine Schmelzvorrichtung zum Schmelzen eines Käses, wobei die Schmelzvorrichtung einen Gehäuseboden, einen Käseträger mit einer Auflageeinheit zum Auflegen des Käses und ein Heizelement zum Schmelzen des Käses aufweist, wobei der Käseträger und Heizelement am und/oder auf dem Gehäuseboden angeordnet sind und der Käseträger fixiert ist.

Zum Schmelzen und/oder Grillen eines Käses, beispielsweise eines Raclette-Käses, sind unterschiedliche Aufheiz- und Grillvorrichtungen vor allem für den Gebrauch im Haushalt bekannt. Für gewerbliche Verwendung, beispielsweise bei Großveranstaltungen und in der Eventgastronomie, ist es jedoch erforderlich eine Vielzahl von Portionen geschmolzenen Käses hintereinander in einer gleichbleibenden Schmelzqualität und Bräunungsgrad bereitzustellen.

In der DE 78 14 309 U1 ist ein Raclette-Grill für eine kleinere Personenanzahl offenbart, bei dem eine quadrantförmige Käseecke auf einem drehbaren Träger eines Käsehaltearms derart beweglich angeordnet ist, dass entweder die eine oder die andere Oberseite der quadrantförmigen Käseecke auf einen Heizkörper zum Anschmelzen oder auf einen Käseabstreifer ausrichtbar ist.

In der EP 2 772 161 B1 wird eine Grillvorrichtung beschrieben, in der eine Heizvorrichtung an einer Trägersäule angeordnet ist und durch einen Benutzer zum Einstellen eines gewünschten Abstandes zu einem darunter angeordneten Grillgutträger höhenverstellbar ist. Der Grillgutträger ist an einem an der Trägersäule befestigten Schwenkarm angeordnet, wodurch der Grillgutträger in einem Vollkreis um die Trägersäule schwenkbar ist.

In der DE 20 2013 105 131 U1 ist ein Raclette-Grill für die Eventgastronomie mit einer zusammensteckbaren geschlossenen Grundform mit Standfüßen beschrieben, wobei der Raclette-Grill eine horizontale Haltevorrichtung zum Halten einer darauf liegenden Einschubplatte und einem darüber ausgerichteten Heizkörper aufweist und die Grundform mit wenigstens einem Tresenelement, beispielsweise einem hexagonförmigen umlaufenden Tresen, verbunden ist.

Die CH 495 140 A offenbart einen Racletteofen, bei welchem der Käsehalter schwenkbar an einer vertikalen Hohlsäule befestigt ist und der Heizkörper über einen Stützarm mit der vertikalen Hohlsäule verbunden ist.

Die CH 432 762 A beschreibt einen Racletteofen, bei dem der Heizkörper derart schräg aufgestellt ist, dass der obere Teil des Käses schneller schmilzt als der der untere Teil des Käses in einem schwenkbaren Käsehalter.

In der CH 604 647 A5 ist ein Racletteofen offenbart, bei dem ein Gasbrenner mit einem Reflektor von einem horizontalen Arm gehalten wird und der horizontale Arm an einem senkrechten Stab vertikal verschiebbar und mittels einer Rändelschraube fixierbar ist.

Die KR 101 616 649 B1 beschreibt ein Röstgerät, bei dem unten an einer Höhenverstelleinrichtung eine Heizeinheit angeordnet ist. Die Höhenverstelleinrichtung weist zwei zueinander abwinkelbare Scherenteile auf, deren Winkel mit einem Winkelanpasser und damit die Höhe der Heizeinheit über auf einen Gitter einer Auflageeinheit gelegten Lebensmitteln einstellbar ist. Die Höhenverstelleinrichtung und somit die daran befestigte Heizeinheit ist an ihrer Oberseite mittels einer Bewegungseinheit entlang von Stangen horizontal beweglich an der Oberseite des Röstgerätes befestigt.

Nachteilig bei den bekannten Vorrichtungen zum Schmelzen und/oder Grillen von Käse ist, dass diese entweder nur für eine geringe Personenanzahl geeignet oder für einen Bediener in der Gastronomie und/oder bei Großveranstaltungen ungünstig ausgebildet sind, sodass ein schnelles Bereitstellen von einer Vielzahl von Portionen an geschmolzenem Käse nicht möglich ist. Häufig sind diese Vorrichtungen durch Anordnung des Käseträgers und/oder des Heizelementes derart ausgebildet, dass eine gewünschte Aufschmelztiefe und/oder Bräunung des Käses nicht punktgenau und zeitgerecht erreicht wird. Nachteilig für den Einsatz in der Veranstaltungs- und Eventgastronomie sind insbesondere Schmelz- und Grillvorrichtungen, bei denen der Bediener den Käse unter das Heizelement schieben und auch wieder herausschieben muss, da aufgrund der andauernden Wärmestrahlung bei einer Großproduktion an geschmolzenem Käse hier prinzipiell die Gefahr der Verbrennung an den Händen des Bedieners besteht. Da das Heizelement auch beim Entfernen des Käses weiter Wärme abstrahlt, wird zudem schnell der Punkt des gewünschten Aufschmelzens und/oder Bräunens des Käses überschritten.

Aufgabe der Erfindung ist es, den Stand der Technik zu verbessern.

Gelöst wird die Aufgabe durch eine Schmelzvorrichtung zum Schmelzen eines Käses, wobei die Schmelzvorrichtung einen Gehäuseboden, einen Käseträger mit einer Auflageeinheit zum Auflegen des Käses und ein Heizelement zum Schmelzen des Käses aufweist, wobei der Käseträger und das Heizelement am und/oder auf dem Gehäuseboden angeordnet sind und der Käseträger fixiert ist, und die Schmelzvorrichtung als Heizelement einen Heizstrahlerarm mit einem Heizstrahler derart aufweist, dass der Heizstrahlerarm mit dem Heizstrahler über dem fixierten Käseträger mittels einer Verschiebeeinheit horizontal verschiebbar ist, wobei der Heizstrahlerarm und der Gehäuseboden derart eingerichtet sind, dass der Heizstrahlerarm mittels der Verschiebeeinheit am und/oder im Gehäuseboden horizontal verschiebbar ist.

Somit wird eine Schmelzvorrichtung bereitgestellt, bei der durch ein horizontales Verschieben des Heizstrahlerarms mit einem daran angeordneten Heizstrahler der Heizstrahler sehr schnell von dem fixierten Käseträger räumlich entfernbar ist. Dadurch wird die Wärmeeinstrahlung des Heizstrahlers auf den Käse aufliegend auf dem Käseträger sofort unterbrochen und eine bestehende Restwärme aufgrund des heißen Heizstrahlers wirkt sich räumlich nicht mehr auf dem Käse auf dem Käseträger aus. Folglich ist ein definiertes Aufschmelzen des Käses mit einer gewünschten Aufschmelztiefe und einer gewünschten Bräunung des Käses direkt einstellbar und/oder einhaltbar.

Durch das horizontale räumliche Verschieben des Heizstrahlerarms mit dem Heizstrahler, und somit einer Verschiebebewegung in horizontaler Richtung parallel insbesondere zu einer Arbeitsplatte, auf welcher die Schmelzvorrichtung steht, werden diese vollständig aus dem Arbeitsbereich eines Bedieners entfernt und der Bediener kann ohne Gefahr von Verbrennungen an den Händen den geschmolzenen Käse beispielsweise mit einem Käseschabemesser abtragen und portionieren.

Folglich wird eine Schmelzvorrichtung bereitgestellt, welche für eine schnelle Produktion einer Vielzahl von Portionen an geschmolzenem Käse, beispielsweise in der Großgastronomie und in der Veranstaltungs-/Eventbranche, geeignet ist.

Dadurch, dass der Heizstrahlerarm mit dem Heizstrahler, welcher über dem fixierten Käseträger angeordnet ist, lediglich vom Bediener ausgesehen zur rechten oder linken Seite verschoben wird, ohne dass die Höhe und somit der Abstand des Heizstrahlers zum Käseträger verändert wird, werden sich aufschaukelnde Aufheiz- und Wärmeffekte mit zunehmender Betriebsdauer des Heizstrahlers vermieden. Dadurch wird eine zunehmende Bräunung der jeweils nacheinander geschmolzenen Käseschichten bei einer langer Betriebsdauer des Heizstrahlers und folglich die zunehmende Gefahr des schnelleren Verbrennens der Käseoberfläche vermieden. Da bei jedem horizontalen Verschieben mittels der Verschiebeeinheit des Heizstrahlerarms der Heizstrahler auch selbst aus dem aufgeheizten Bereich herausgeschoben wird, kühlt sich dieser ab, sodass ein zu starkes Aufheizen des Heizstrahlers mit der Zeit verhindert wird.

Aufgrund der definierten horizontalen Verschiebebewegung mittels der Verschiebeeinheit des Heizstrahlerarms mit dem Heizstrahler sind reproduzierbar in der jeweils selben Schmelzzeit nacheinander folgende Portionen von geschmolzenem Käse produzierbar.

Ein wesentlicher Gedanke der Erfindung beruht darauf, einen Heizstrahlerarm mit einem Heizstrahler, welcher über einem Käseträger angeordnet ist, bei Erreichen des gewünschten Aufschmelz- und/oder Bräunungsgrades des Käses sehr schnell mittels einer Verschiebeeinheit lediglich horizontal und somit seitlich aus dem Bereich des Käseträgers herauszuschieben, sodass der geschmolzene Käse ohne Einwirkung von weiterer Wärme(-strahlung) als oberste geschmolzene Schicht abgenommen und portioniert wird.

Eine "Schmelzvorrichtung" ist insbesondere eine Vorrichtung, mit welcher Käse an seiner definierten Oberfläche und/oder Schnittkante geschmolzen wird. Die Schmelzvorrichtung ist insbesondere ein thermisches Elektrogerät, bei dem mittels Wärmestrahlung eines Heizstrahlers das Schmelzen des Käses an seiner Oberfläche erfolgt. Eine Schmelzvorrichtung weist insbesondere einen horizontal verschiebbaren Heizstrahlerarm auf, an welchem der Heizstrahler angeordnet ist. Die Schmelzvorrichtung und/oder deren Bestandteile weisen als Material insbesondere rostfreien Edelstahl, wie beispielsweise der Qualität 1.4301 oder höherwertig wie 1.404, auf. Die Schmelzvorrichtung und deren Bestandteile weisen insbesondere eine Materialstärke von 1 - 4 mm auf.

Unter "Schmelzen" wird insbesondere ein Phasenübergang eines festen Käses oder Käsestückes in einen flüssigen Aggregatzustand unter Wärmezufuhr verstanden. Somit ist der geschmolzene Käse fließfähig.

Unter "Käse wird ein festes Milcherzeugnis verstanden, welches üblicherweise durch Gerinnen aus einem Eiweißanteil der Milch (Kasein) gewonnen wird. Bei einem Käse handelt es sich insbesondere um einen für das Schmelzen besonders geeigneten Käse und/oder einen Raclettekäse beziehungsweise um einen Teil davon. Bei einem Käse handelt es sich insbesondere auch um einen rechteckigen Laib oder Stück eines Käses. Der Käse weist als Käselaib insbesondere eine Kastenform auf.

Unter einem "Gehäuseboden" wird ein Gehäuse als feste Hülle verstanden, welche gleichzeitig den Boden der Schmelzvorrichtung ausbildet. Ein Gehäuseboden kann beispielsweise zusätzlich eine Schublade zum Aufnehmen eines Abschabemessers für den geschmolzenen Käse aufweisen. Auf der Oberseite des Gehäusebodens sind insbesondere der Käseträger und/oder der Heizstrahlarm angeordnet. Ein Gehäuseboden kann auch als Platte ausgebildet sein oder eine Platte aufweisen.

Ein "Käseträger" ist insbesondere eine Halterung für einen Käse. Der Käse wird insbesondere auf der Oberseite des Käseträgers in oder auf den Käseträger aufgelegt. Zum Auflegen des Käses weist der Käseträger insbesondere eine "Auflageeinheit" auf. Bei einer Auflageeinheit kann es sich beispielsweise um eine Platte, eine Mulde im Käseträger oder eine einsetzbare Schüssel handeln, welche an der Oberseite des Käseträgers derart angeordnet ist, dass eine Wärmestrahlung des Heizstrahlers auf den Käse in oder auf der Auflageeinheit ausrichtbar ist. Die Auflageeinheit kann mit einer Höhenverstelleinrichtung verbunden sein. Der Käseträger weist um die Auflageeinheit und/oder den Käse insbesondere seitliche Begrenzungselemente auf. Insbesondere sind diese seitlichen Begrenzungselemente als Wärmeschutzwände ausgebildet. Die Wärmeschutzwände umfassen den Käse insbesondere auf den sich gegenüberliegenden Seiten, zu denen der mittels der Verschiebeeinheit verschiebbare Heizstrahlerarm in die eine oder die andere Richtung verschiebbar ist.

Durch die Begrenzungselemente und/oder Wärmeschutzwände des Käseträgers wird insbesondere in vertikaler Richtung ein fest vorgegebener Abstand der Auflageeinheit zu dem Heizstrahler vorgegeben.

Unter "fixiert" wird insbesondere verstanden, dass der Käseträger auf dem Gehäuseboden feststehend ist und während des Schmelzens nicht bewegt wird. Der Käseträger ist jedoch grundsätzlich von dem Gehäuseboden und/oder einer Grundplatte lösbar und an diesem oder dieser beispielsweise lösbar mittels einer Schraube oder mehreren Schrauben oder Steckverbindungen befestigt. Somit ist der Käseträger wie auch die anderen Bestandteile der Schmelzvorrichtung für eine Reinigung und/oder einen Transport demontierbar und zerlegbar.

Ein "Heizelement" ist insbesondere ein technisches Bauteil, mit welchem einem Käse Wärmeenergie zugeführt werden kann. Bei einem Heizelement handelt es sich insbesondere um ein elektrisches Heizelement. Das Heizelement ist insbesondere als ein Heizstrahlerarm mit einem Heizstrahler ausgebildet.

Bei einem "Heizstrahlerarm" handelt es sich insbesondere um einen Trägerarm mit einem daran angeordneten Heizstrahler. Der Heizstrahlerarm weist insbesondere einen vertikalen Trägerarm auf, an dem der Heizstrahler vertikal ausgerichtet angeordnet ist.

Bei einem "Heizstrahler" handelt es sich insbesondere um ein Bauteil, welches Infrarotstrahlung (IR) erzeugt und/oder aussendet und somit eine Erwärmung einer angestrahlten Fläche, insbesondere der Oberfläche des Käses, erzeugt. Bei einem Heizstrahler handelt es sich insbesondere um eine Infrarot- und/oder Wärmelampe, welche überwiegend nicht sichtbare Wärmestrahlung abgibt. Bei einem Heizstrahler handelt es sich insbesondere um einen Infrarotstrahler, welcher als Zwillingsstrahler mit einer einseitigen Kabelführung ausgebildet ist. Der Heizstrahler weist insbesondere einen Elektroanschluss auf einer der Querflächen oder einer Unterfläche des Heizstrahlers und/oder eines Strahlerhalters auf. Über die Kabelführung ist der Heizstrahler insbesondere mit einer Elektroschaltbox im Gehäuseboden und darüber mit einem Netzanschlusskabel verbunden. Der Heizstrahler weist beispielsweise eine Gesamtlänge von 410 mm bei einem Heizfadenlänge von 320 mm auf. Des Weiteren weist der Heizstrahler eine Aufheizzeit von 1 - 2 s, eine Leistung von 1,2 - 2 kW und eine Heizfadentemperatur von 1.700 - 1.850 K bei einer durchschnittlichen Heizfadentemperatur von 1.800 K auf. Der Heizstrahler weist weiterhin insbesondere einen goldbedampften Reflektor, einen Aluminiumreflektor oder einen Reflektor aus einem oder mehreren anderen Materialien auf. Der Heizstrahler ist insbesondere in einem Halter montiert. Der Heizstrahler weist insbesondere einen Strahlerhalter und/oder ein Gehäuse mit seitlichen und oben angeordneten Belüftungslöchern und/oder Luftschlitze auf. Im Strahlerhalter befindet sich bevorzugt ein Lüfter. Der Lüfter befindet sich bevorzugt im Dauerbetrieb, wenn die Schmelzvorrichtung angeschaltet ist und auch wenn der selbst Heizstrahler ausgeschaltet ist, um einen Temperaturstau im Strahlerhalter zu vermeiden, Käsedämpfe wegzublasen und Verunreinigung des (IR-)Strahlers zu vermeiden. Der Halter des Heizstrahlers kann insbesondere außen Wärmeleitbleche aufweisen. Des Weiteren kann der Heizstrahler an seiner Unterseite eine strahlendurchlässige Abdeckplatte oder ein Abdeckgitter aufweisen, um den Heizstrahler und dessen Lampe vor eindringenden Gegenständen und/oder Verunreinigungen, wie beispielsweise durch spritzendes Fett, zu schützen. Die Abdeckplatte des Heizstrahlers ist beispielsweise aus Glaskeramik ausgeführt.

Des Weiteren weist der Heizstrahler insbesondere einen An-Aus-Schalter auf, welcher über eine mechanische Steuerung betätigt wird, wenn der Heizstrahlerarm mit dem Heizstrahler mittels der Verschiebeeinheit horizontal zur Seite verschoben wird.

Insbesondere wird der Heizstrahler bei Erreichen einer vorgegebenen Verschiebestellung oder Endstellung beim maximalen horizontalen Verschieben nach links oder rechts automatisch an- oder ausgeschaltet. Wird der Heizstrahler mittels der Verschiebeeinheit außerhalb des Bereiches des Käseträgers zu einer Zwischenposition horizontal verschoben, so geht der Heizstrahler insbesondere automatisch in einen Aus- und/oder Standby-Modus.

Eine "Verschiebeeinheit" (auch Verschiebeträger genannt) ist insbesondere ein Bauteil oder eine Baugruppe, welche ein horizontales Verschieben des Heizstrahlerarms mit dem Heizstrahler am und/oder auf dem Gehäuseboden der Schmelzvorrichtung ermöglicht. Mittels der Verschiebeeinheit wird insbesondere eine mechanische Translation des Heizstrahlerarms mit dem daran angeordneten Heizstrahler durchgeführt. Das Verschieben findet insbesondere in horizontaler Richtung frei von einer Höheneinstellung des Heizstrahlerarms und/oder des Heizstrahlers statt. Bei einer Verschiebeeinheit kann es sich beispielsweise um eine Schiene eingelassen in den Gehäuseboden oder in einer Seitenwand des Gehäusebodens handeln. Ebenso kann es sich bei der Verschiebeeinheit um einen Schlitz handeln, durch welchen der Heizstrahlerarm geführt und verschiebbar ist. Hierzu kann beispielsweise der senkrechte Träger des Heizstrahlerarms über eine Stütze mittels eines beständigen Gleitlagers, Kugellagers und/oder Nadellagers oder auf Rollen im Inneren des Bodens verschoben werden. Die Verschiebeeinheit weist insbesondere eine oder mehrere Rastpositionen auf. An diesen Rastpositionen kann beispielsweise wie oben beschrieben der Heizstrahler automatisch an- und ausgestellt oder in einen Standby-Modus versetzt oder für einen Transport fixiert werden

Erfindungsgemäß sind der Heizstrahlerarm und der Gehäuseboden derart eingerichtet, dass der Heizstrahlerarm mittels der Verschiebeeinheit am und/oder im Gehäuseboden horizontal verschiebbar ist.

Somit ist die Verschiebeeinheit derart am und/oder im Gehäuse integrierbar, dass der Heizstrahlerarm bündig am und/oder im Gehäuseboden horizontal verschiebbar ist. Dadurch wird zum einen die Stabilität des verschiebbaren Heizstrahlerarms erhöht und zum anderen aufgrund der bündigen Anordnung der Reinigungsaufwand zum Reinigen der Schmelzvorrichtung verringert.

Um in einfacher Weise den Heizstrahlerarm am und/oder im Gehäuseboden horizontal verschieben zu können, weist die Verschiebeeinheit eine Aussparung des Gehäusebodens auf, sodass der Heizstrahlerarm entlang der Aussparung horizontal verschiebbar ist.

Somit wird durch die Positionierung und Länge der Aussparung direkt der Verschiebeweg und somit die maximale Verschiebbarkeit des Heizstrahlerarms festgelegt.

Es ist insbesondere vorteilhaft, dass die Aussparung in einer Fläche des Gehäusebodens ausgeführt ist, beispielsweise auf der Oberseite oder einer Seitenwand des Gehäusebodens.

Bei einer "Aussparung" handelt es sich insbesondere um einen Freiraum im Gehäuseboden. Bei einer Aussparung kann es sich insbesondere um eine Nut als eine längliche Vertiefung und/oder um einen Schlitz in einer der Seitenwände des Gehäusebodens handeln. In dieser Aussparung kann beispielsweise eine Schiene zum Verschieben des Heizstrahlerarms eingesetzt sein. Ebenso kann durch den beispielsweise seitlichen Schlitz im Gehäuseboden der Heizstrahlerarm mittels einer Stütze durch den Schlitz in das Innere des Gehäusebodens zur Ausbildung und/oder Verbindung mit der Verschiebeeinheit ausgeführt sein.

In einer weiteren Ausführungsform der Schmelzvorrichtung ist die Aussparung im Geräteboden von einer Seite, an welcher der Heizstrahlerarm angeordnet ist, durchgehend zu einer gegenüberliegenden Seite ausgebildet, sodass mittels eines Bedienelementes an der gegenüberliegenden Seite der Heizstrahlerarm horizontal verschiebbar ist.

Somit ist mittels des Bedienelementes durch den Benutzer der Schmelzvorrichtung der Heizstrahlerarm mit dem daran angeordneten Heizstrahler verschiebbar, ohne dass der Bediener selbst den Heizstrahlerarm anfassen oder in dessen Wärmebereich gelangt. Es ist besonders vorteilhaft, dass durch die gegenüberliegende Anordnung des Heizstrahlerarms auf der einen Seite des Gerätebodens und des Bedienelementes auf der gegenüberliegenden anderen Seite des Gerätebodens ein maximaler Abstand zwischen der Hand eines Bedieners, welche das Bedienelement bedient, und dem warmen Heizstrahlerarm vorliegt. Folglich werden Verbrennungen an der Hand des Bedieners vermieden.

Ein "Bedienelement" weist insbesondere ein Verbindungselement zu dem Heizstrahlerarm, des Trägers des Heizstrahlerarms oder einer bereits oben beschriebenen Stütze auf. Das Bedienelement kann insbesondere als Stange oder Bolzen ausgeführt sein. Am entfernt liegenden Ende weist das Bedienelement insbesondere einen Handgriff zum Bedienen durch einen Benutzer auf. Dieser Griff kann insbesondere ein wärmeisolierendes Material aufweisen.

Um den Heizstrahler automatisch abzuschalten und/oder transportabel auszugestalten, ist der Heizstrahler an dem Heizstrahlerarm drehbar, schwenkbar und/oder klappbar ausgestaltet.

Bei einer klappbaren Ausbildung kann der Heizstrahler beispielsweise nach unten gegen den vertikalen Träger des Heizstrahlerarm geklappt werden. Hierzu kann der Heizstrahler beispielsweise gegen eine Rückwand des Trägers geklappt werden oder der Träger weist zwei seitliche Wände auf, zwischen welchen der Heizstrahlerarm eingeklappt wird.

Beispielsweise kann der Heizstrahlerarm jedoch auch drehbar ausgestaltet werden, um den Heizstrahler, wenn dieser mit dem Heizstrahlerarm horizontal verschoben wurde, nach oben zu drehen, damit die Oberseite des Gerätebodens und/oder eine Grundplatte als Arbeitsplatte vollständig genutzt werden kann, ohne dass die noch bestehende Wärmeabstrahlung des Heizstrahlers in diesen Arbeitsbereich einwirkt und diesen erwärmt. Somit kann die Oberseite des Gerätebodens und/oder die Grundplatte beispielsweise neben dem Käseträger zum Schneiden von Brot verwendet werden. Ebenso kann der Heizstrahler entsprechend geschwenkt werden, um eine Wärmestrahlung aus einem verwendeten Arbeitsbereich herauszurichten.

Unter "drehbar" wird insbesondere die Drehung des Heizstrahlers um eine Mittelachse verstanden. Unter Drehen wird insbesondere eine Bewegung um die Längsmittelachse des Heizstrahlers verstanden. Unter "schwenkbar" wird insbesondere verstanden, dass der Heizstrahler um eines seiner Enden als Schwenkfixpunkt hin- und herbewegbar ist und am gegenüberliegenden Ende ausschwenkt. Hierzu weist der Heizstrahler an dem Fixpunktende insbesondere ein Schwenkgelenk auf.

Unter "klappbar" wird insbesondere verstanden, dass der Heizstrahler durch eine Bewegung an den Heizstrahlerarm und/oder seinem Träger angelegt wird. Durch das Herunterklappen des Heizstrahlers an den Träger des Heizstrahlerarms, wird der Heizstrahler insbesondere automatisch ausgeschaltet. Statt einem Ausschalten kann der Heizstrahler jedoch auch auf eine geringe Leistung, wie beispielsweise 10 bis 15 % der maximalen Leistung, heruntergeschaltet werden, sodass dieser schnell wieder in Betrieb nehmbar ist. Dies ist besonders vorteilhaft, wenn der Heizstrahler lediglich für den Zweck einer Reinigung der Oberflächen des Gehäusebodens oder der Grundplatte an den Heizstrahlerarm angeklappt wird und nach erfolgter Reinigung direkt wieder in Betrieb genommen wird.

In einer weiteren Ausführungsform der Schmelzvorrichtung ist der Heizstrahlerarm lösbar am Verschiebeträger angeordnet.

Somit ist der Heizstrahlerarm beispielsweise lösbar von der Stütze dem Bedienelement und/oder der Verschiebeeinheit demontierbar. Hierzu kann der Heizstrahlerarm beispielsweise entsprechend absteckbar sein oder Verbindungselemente, wie Schrauben, können mittels entsprechender Werkzeuge gelöst werden.

Unter "lösbar" wird insbesondere verstanden, dass die Verbindung zwischen dem Heizstrahlerarm und dem Verschiebeträger, Gehäuseboden, der Stütze, der Verschiebeeinheit und/oder dem Bedienelement ohne Beschädigung dieser Bauteile wieder gelöst werden kann.

Für das Lösen des Heizstrahlerarms am und/oder vom Gehäuseboden für eine Reinigung oder einen Transport weist der Heizstrahlerarm und/oder die Schmelzvorrichtung beispielsweise einen Entriegelungsknopf auf.

Um mittelwellige Infrarotwärmestrahlung auf den Käse auszurichten, weist der Heizstrahler eine Infrarotstrahlung in einem Wellenlängenbereich von 1,40 µm bis 3,00 pm, insbesondere von 1,50 µm bis 2,50 pm, bevorzugt von 1,60 µm bis 1,80 pm, auf. Dieser Wellenlängenbereich ist besonders geeignet, um den gewünschten Aufschmelz- und/oder Bräunungsgrades mit intensiven Bräunungsaromen des Käses zu erreichen.

In einer weiteren Ausführungsform der Schmelzvorrichtung ist der Käseträger auf einer Grundplatte des Gehäusebodens angeordnet, wobei die Grundplatte um 180° drehbar ist.

Dadurch, dass der Käseträger auf der Grundplatte montiert ist und diese auf der Oberseite des Gehäusebodens angeordnet um einen Winkel von 180 ° drehbar ist, kann die Schmelzvorrichtung auch von Linkshänder genutzt werden. Dadurch kann der auf der Grundplatte fixierte Käseträger sowohl für Linkshänder als auch für Rechtshänder optimal in der Schmelzvorrichtung mittels eines Drehens der Grundplatte angeordnet werden. Zudem kann für einen Linkshänder- oder Rechtshänderbetrieb die Ein-Aus-Schalter-Funktion entsprechend wählbar am Gehäuseboden angeordnet sein.

Bei einer "Grundplatte" handelt es sich insbesondere um eine Platte, welche auf und/oder in der Oberseite des Gehäusebodens angeordnet ist. Eine Grundplatte weist beispielsweise einen mineralisch-organischen Grundwerkstoff (Acrylstein), Edelstahl, einen Kunststoff wie Polyethylen oder einen anderen lebensmittelverträglichen und wärmebeständigen Werkstoff auf. Die Grundplatte weist insbesondere einen Werkstoff auf, welcher eine Temperatur von 80 bis 120 °C im Betrieb der Schmelzvorrichtung beständig aushält. Die Grundplatte ist insbesondere von und/oder aus der Oberfläche des Gerätebodens herausnehmbar, um diese beispielsweise zu reinigen.

Um ein zu frühzeitiges Schmelzen des Käses in tiefen Schichten des Käselaibes und dadurch eine wahrscheinliche Destabilisierung des Käselaibes zu vermeiden, weist die Auflageeinheit des Käseträgers zwei seitliche Schutzwände auf.

Dadurch wird ein definiertes Schmelzen des Käses lediglich an seiner Oberseite, mit einer Aufschmelztiefe von 1 mm bis 6 mm, insbesondere von 2 mm bis 4 mm, bevorzugt von 3 mm, erzielt.

Die beiden Schutzwände sind jeweils seitlich um die Querseiten des Käseträgers mit herumgeführt und lassen auf der dem Bediener zugewandten Querseite einen Durchlass für eine Handkurbel zum Bedienen einer Höhenverstelleinrichtung zum Verstellen der Höhe des Käselaibes, beispielsweise mittels eines verstellbaren Scherenmechanismus, frei.

Es ist besonders vorteilhaft, wenn die Schutzwände des Käseträger einen oberen, beispielsweise um 45° nach außen gebogenen Rand aufweisen, damit beim Käseabschaben abfallenden Käseteile und/oder geschmolzener Käse nicht auf die Außenseite der Schutzwand fällt und/oder tropft.

Bei einer "Schutzwand" handelt es sich insbesondere um eine Wärmeschutzwand. Die Schutzwand lässt insbesondere die Wärmestrahlung und somit die Infrarotstrahlung des Heizstrahlers nicht oder nur vermindert durch.

In einer weiteren Ausführungsform der Schmelzvorrichtung weist der Käseträger eine Höhenverstelleinrichtung zum Einstellen einer Höhe der Auflageeinheit auf.

Dadurch kann die Höhe der Oberfläche des Käses aufliegend auf der Auflageeinheit nach jedem Abschaben des geschmolzenen Käses an der Oberfläche nach oben hochbewegt und somit immer derselbe Abstand der zu schmelzenden Oberfläche des Käses zur Oberkante der seitlichen Begrenzungs- und/oder Schutzwände von beispielsweise 0 cm bis 2 cm, bevorzugt von 1 cm, eingestellt werden. Dadurch wird eine definierte Aufschmelztiefe und ein definierter Bräunungsgrad reproduzierbar bei chargenweise hintereinander aufgeschmolzenen Käseoberflächen ermöglicht.

Bevorzugt wird durch die Höhenverstelleinrichtung lediglich die Auflageeinheit nach oben bewegt, während die seitlichen Begrenzungs- und/oder Schutzwände des Käseträgers fixiert stehen bleiben, sodass stets durch die seitlichen Begrenzungs- und/oder Schutzwände ein fest vorgegebener Abstand zur Unterseite des Strahlerhalters, beispielsweise von 3 cm bis 6 cm, bevorzugt von 4 cm, vorliegt.

Eine "Höhenverstelleinrichtung" ist insbesondere eine Einrichtung und/oder ein Bauteil, mit welchem die Höhe der Auflageeinheit nach oben und/oder nach unten verstellt werden kann. Eine Höhenverstelleinrichtung weist dazu beispielsweise einen Scherenmechanismus auf. Die Höhenverstelleinrichtung kann aber auch einen Zahnradmechanismus und/oder eine Kettenzugmechanismus aufweisen.

Im Weiteren wird die Erfindung anhand von Ausführungsbeispielen näher erläutert. Es zeigen
- Figur 1: eine stark schematische perspektivische Darstellung eines Raclette-Grills mit einem Heizstrahlerarm und ausgeschwenktem Strahlerhalter, und
- Figur 2: der Raclette-Grill mit an dem Heizstrahlerarm eingeklapptem Strahlerhalter.

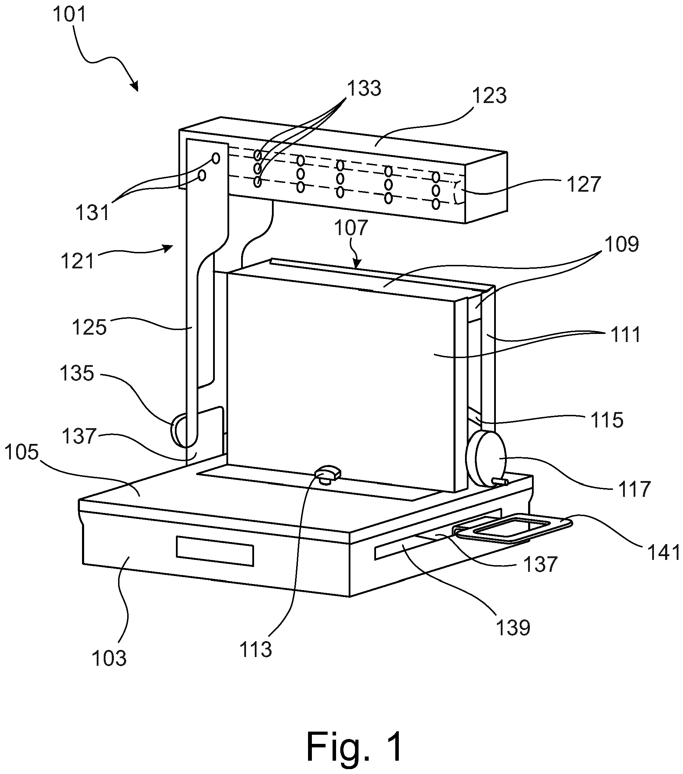

Ein Raclette-Grill 101 weist einen Gehäuseboden 103 auf, welcher auf einem nicht gezeigten Tisch steht. Auf seiner Oberseite weist der Gehäuseboden 103 eine Grundplatte 105 aus Edelstahl auf. Auf der Grundplatte 105 ist ein Käseträger 107 angeordnet. Der Käseträger 107 weist eine rechteckige Form auf, welche außen durch zwei Schutzwände 111 begrenzt ist, wobei die beiden Schutzwände 111 jeweils sowohl eine Längsseite des rechteckigen Käseträgers 107 als auch teilweise jeweils eine kürzere Querseite umgeben. Im Inneren weist der Käseträger 107 eine Käseauflage 109 und einen Scherenhebelmechanismus 115 zur Höhenverstellung der Käseauflage 109 auf. Zwischen dem mittigen Freiraum zwischen den beiden Schutzwänden 111 an der Querseite ist eine Handkurbel 117 angeordnet, welche mit dem Scherenhebelmechanismus 115 verbunden ist und bei einer Höhenverstellung mittels des Scherenhebelmechanismus 115 mit bewegt wird (siehe Fig. 1). Der Käseträger 107 ist beidseitig über die jeweilige Schutzwand 111 mit jeweils einer Schraube 113 an der Grundplatte 105 lösbar fixiert (in Figur 1 ist nur die vordere Schraube 113 sichtbar).

Hinten an der Seite des Gehäusebodens 103 ist ein Heizstrahlerarm 121 angeordnet. Der Heizstrahlerarm 121 weist einen senkrechten Trägerarm 125 mit zwei Seitenwänden auf. Oben am Trägerarm 125 ist ein Strahlerhalter 123 mittels eines Klappgelenks 131 am Trägerarm 125 verbunden. In der Figur 1 ist der Heizstrahlerarm 121 im ausgeklappten Zustand gezeigt, sodass der Strahlerhalter 123 horizontal über dem Käseträger 107 angeordnet ist und senkrecht zum Trägerarm 125 steht. Der Strahlerhalter 125 weist an seinen Längsseitenwänden eine Vielzahl von Belüftungslöchern 133 auf. Innen im Strahlerhalter 123 ist ein IR-Strahler 127 gehalten, welcher als Zwillingsstrahler ausgebildet ist. Ein Elektroanschluss 129 ist einer Querfläche des Strahlerhalters 123 angeordnet, welche auf der Seite des Trägerarms 125 liegt. Der Elektroanschluss 129 ist mit einer Elektroschaltbox im dem Bediener abgewandten Teil des Gehäusebodens 103 verbunden, welche wiederum mit einem Elektroanschluss für ein Netzanschlusskabel verbunden ist, welches sich an der Rückseite des Gehäusebodens 103 befindet (in Figuren nicht sichtbar).

Unten ist der Trägerarm 125 mittels einer Schraube 135 mit einem Verschiebeträger 137 verbunden. Der Gehäuseboden 103 weist auf der Seite des Heizstrahlerarm 121 und auf der in Figur 1 gezeigten gegenüberliegenden Seite einen durchgehenden Schlitz 139 auf. Der Verschiebeträger 137 ist durch den durchgehenden Schlitz 139 von der Seite des Heizstrahlerarms 121 im Inneren des Gehäusebodens 103 bis zur gegenüberliegenden Seite geführt. Auf dieser in Figur 1 sichtbaren gegenüberliegenden Seite ist ein Verschiebegriff 141 angeordnet. Innerhalb des Gehäusebodens 103 ist eine nicht gezeigte Verrastung mit mehreren Rastpositionen, ein Rollenlager zur Unterstützung der Verschiebebewegung sowie eine Schaltbox mit Anlaufstrombegrenzer angeordnet.

Mit dem Raclette-Grill 101 werden folgende Arbeitsvorgänge im Rahmen eines Gastronomieangebotes durchgeführt:

Ein kastenförmiger Raclette-Käselaib wird auf die Käseauflage 109 gelegt und mittels der Handkurbel 117 ein empfohlener Abstand der Oberkante der Schutzwände 111 zu der Oberfläche des Raclette-Käselaibes eingestellt. Hierbei steht der Bediener des Raclette-Grills 101 vor der Handkurbel 117 für eine Rechtshänder-Bedienung.

Mittels des Verschiebegriffs 141 schiebt der Bediener nun den Heizstrahlerarm 121 aufgrund der Verbindung über den Verschiebeträger 137 im Inneren des Gehäusebodens 103 derart, dass der Strahlerhalter 123 mit dem IR-Strahler 127 direkt über dem Käseträger 107 angeordnet ist. Der IR-Strahler 127 wird angeschaltet und beginnt, mittelwellige Wärmestrahlung abzugeben, wodurch der Raclette-Käselaib auf seiner Oberfläche anfängt, zu schmelzen. Bei Erreichen der gewünschten Aufschmelztiefe von 3 mm und des gewünschten Bräunungsgrades bewegt der Bediener den Verschiebegriff 141 in eine erste Rastposition, wodurch der IR-Strahler 127 automatisch aufgrund einer mechanischen Steuerung in einen Aus-Modus geht. Dadurch, dass der Heizstrahlerarm 121 mit dem IR-Strahler 127 schlagartig von dem Käseträger 107 mit dem an der Oberfläche angeschmolzenen Raclette-Käselaib in horizontaler Richtung weggeschoben wird, wird eine Nachbräunung und ein weiteres Aufschmelzen der Oberfläche des Raclette-Käselaibes verhindert.

Der Bediener nimmt nun ein Käseschabemesser und zieht die obere geschmolzene Käseschicht mittels des Käseschabemessers von der Oberfläche des Raclette-Käselaibes auf einen Teller ab.

Anschließend dreht der Bediener mittels der Handkurbel 117 die Käseauflage 109 entsprechend der abgeschabten Aufschmelztiefe nach oben. Daraufhin wird der Heizstrahlerarm 121 mit dem IR-Strahler 127 mittels des Verschiebegriffes 141 wieder horizontal nach rechts in die Ausgangsposition verschoben, sodass der IR-Strahler 127 wieder über dem Käseträger 107 steht. Bei Erreichen dieser Ausgangsposition geht der IR-Strahler 127 automatisch wieder in den Betrieb und die nächste noch feste Oberfläche des Raclette-Käselaibes wird entsprechend wie oben beschrieben aufgeschmolzen und gebräunt.

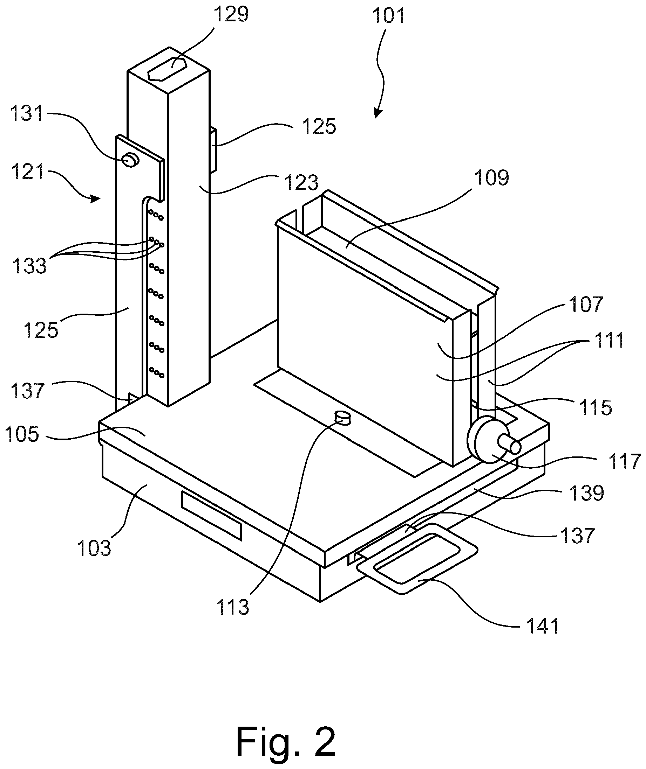

Nachdem eine Vielzahl von Portionen an geschmolzenem Raclette-Käse zubereitet wurden, wird der Heizstrahlerarm 121 mittels des Verschiebeträgers 137 komplett nach links im Schlitz 139 verschoben, wodurch der IR-Strahler 127 automatisch ausgeschaltet wird. Der Strahlerhalter 123 mit dem IR-Strahler 127 wird über das Klappgelenk 131 an den vertikalen Trägerarm 125 des Heizstrahlerarm 121 angeklappt. Hierbei liegt der Strahlerhalter 123 mit dem IR-Strahler 127 zwischen den Seitenwänden des vertikalen Trägerarms 125 an (siehe Figur 2). Somit steht nun die Querseite des Strahlerhalters 123 mit dem Elektroanschluss 129 nach oben. Das nicht gezeigte Netzanschlusskabel wird entsprechend von dem Elektroanschluss 129 abgezogen.

Zur Reinigung und zum Transport wird nun der Käsehalter 107 über die beidseitigen Schrauben 123 gelöst, sodass die beiden Schutzwände 111 nacheinander von der Grundplatte 105 entfernt und der dazwischen liegende Scherenmechanismus 115 mit der daran angeordneten Handkurbel 117 und der Käseauflage 109 ebenfalls entnommen wird.

Anschließend wird die Schraube 137, welche den Trägerarm 125 des Heizstrahlerarms 121 mit dem Verschiebeträger 137 verbinden, gelöst und der Heizstrahlerarm 121 vom Verschiebeträger 137 abgenommen. Die Grundplatte 105 wird hochgehoben und ebenfalls abgenommen. Die Grundplatte 105 sowie der komplette Käseträger 107 mit der Käseauflage 109, den Schutzwänden 111, den Schrauben 113, dem Scherenhebelmechanismus 115 und der Handkurbel 117 werden in einer Geschirrspülmaschine gereinigt. Dementsprechend werden diese Bestandteile des Raclette-Grills 101 für den nächsten Gastronomieeinsatz wieder zusammengesetzt und verwendet.

Somit wird ein Raclette-Grill 101 bereitgestellt, welcher ein definiertes Aufschmelzen und Bräunen von einer Vielzahl von geschmolzenen Raclette-Käseportionen ermöglicht, ohne dass der Bediener beim Abschaben der geschmolzenen Raclette-Käselaiboberfläche mit seinen Händen in den Bereich der Wärmestrahlung des IR-Strahlers 127 gelangt. Folglich werden Hautverbrennungen bei Verwendung dieses Raclette-Grills 101 vermieden. Zudem ist der Raclette-Grill 101 in wesentliche Bestandteile auseinandernehmbar und dadurch leicht reinigbar und transportierbar.

### Bezugszeichenliste

- 101: Raclette-Grill
- 103: Gehäuseboden
- 105: Grundplatte
- 107: Käseträger
- 109: Käseauflage
- 111: Schutzwand
- 113: Schraube
- 115: Scherenhebemechanismus
- 117: Handkurbel
- 121: Heizstrahlerarm
- 123: Strahlerhalter
- 125: Trägerarm
- 127: IR-Strahler
- 129: Elektroanschluss
- 131: Klappgelenk
- 133: Belüftungslöcher
- 135: Schraube
- 137: Verschiebeträger
- 139: Schlitz
- 141: Verschiebegriff

## Patentansprüche

1. Schmelzvorrichtung (101) zum Schmelzen eines Käses, wobei die Schmelzvorrichtung einen Gehäuseboden (103), einen Käseträger (107) mit einer Auflageeinheit (109) zum Auflegen des Käses und ein Heizelement zum Schmelzen des Käses aufweist, wobei der Käseträger (107) und das Heizelement am und/oder auf dem Gehäuseboden (103) angeordnet sind und der Käseträger (107) fixiert ist, wobei die Schmelzvorrichtung (101) als Heizelement einen Heizstrahlerarm (121) mit einem Heizstrahler (127) derart aufweist, dass der Heizstrahlerarm (121) mit dem Heizstrahler (127) über den fixierten Käseträger (107) mittels einer Verschiebeeinheit (137) horizontal verschiebbar ist, **dadurch gekennzeichnet, dass** der Heizstrahlerarm (121) und der Gehäuseboden (103) derart eingerichtet sind, dass der Heizstrahlerarm (121) mittels der Verschiebeeinheit (137) am und/oder im Gehäuseboden (103) horizontal verschiebbar ist.

2. Schmelzvorrichtung (101) nach Anspruch 1, **dadurch gekennzeichnet, dass** die Verschiebeeinheit (137) eine Aussparung (139) des Gehäuseboden (103) aufweist, sodass der Heizstrahlerarm (121) entlang der Aussparung (139) horizontal verschiebbar ist.

3. Schmelzvorrichtung (101) nach Anspruch 2, **dadurch gekennzeichnet, dass** die Aussparung (139) im Geräteboden (103) von einer Seite, an welcher der Heizstrahlerarm (121) angeordnet ist, durchgehend zu einer gegenüberliegenden Seite ausgebildet ist, sodass mittels eines Bedienelementes (141) an der gegenüberliegenden Seite der Heizstrahlerarm (121) horizontal verschiebbar ist.

4. Schmelzvorrichtung (101) nach einem der vorherigen Ansprüche, **dadurch gekennzeichnet, dass** der Heizstrahler (127) an dem Heizstrahlerarm (121) drehbar, schwenkbar und/oder klappbar ausgebildet ist.

5. Schmelzvorrichtung (101) nach einem der vorherigen Ansprüche, **dadurch gekennzeichnet, dass** der Heizstrahlerarm (121) lösbar an der Verschiebeeinheit (137) angeordnet ist.

6. Schmelzvorrichtung (101) nach einem der vorherigen Ansprüche, **dadurch gekennzeichnet, dass** der Heizstrahler (127) eine Infrarotstrahlung in einem Wellenlängenbereich von 1,40 µm bis 3,00 pm, insbesondere von 1,50 µm bis 2,50 µm, bevorzugt 1,60 µm bis 1,80 µm, aufweist.

7. Schmelzvorrichtung (101) nach einem der vorherigen Ansprüche, **dadurch gekennzeichnet, dass** der Käseträger (107) auf einer Grundplatte (105) des Gehäusebodens (103) angeordnet ist, wobei die Grundplatte (105) um 180° drehbar ist.

8. Schmelzvorrichtung (101) nach einem der vorherigen Ansprüche, **dadurch gekennzeichnet, dass** die Auflageeinheit (109) des Käseträgers (107) zwei seitliche Schutzwände (111) aufweist.

9. Schmelzvorrichtung (101) nach einem der vorherigen Ansprüche, **dadurch gekennzeichnet, dass** der Käseträger (107) eine Höhenverstelleinrichtung (115) zum Einstellen einer Höhe der Auflageeinheit (109) aufweist.

## Claims

1. Melting device (101) for melting a cheese, wherein the melting device has a housing base (103), a cheese carrier (107) with a support unit (109) for placing the cheese and a heating element for melting the cheese, wherein the cheese carrier (107) and the heating element are arranged at and/or on the housing base (103) and the cheese carrier (107) is fixed, wherein the melting device (101) has as a heating element a radiant heater arm (121) with a radiant heater (127) such that the radiant heater arm (121) with the radiant heater (127) is movable horizontally over the fixed cheese carrier (107) by means of a displacement unit (137), **characterised in that** the radiant heater arm (121) and the housing base (103) are arranged in such a way that the radiant heater arm (121) is movable horizontally by means of the displacement unit (137) on and/or in the housing base (103).

2. Melting device (101) according to claim 1, **characterised in that** the displacement unit (137) has an opening (139) of the housing base (103), so that the radiant heater arm (121) is movable horizontally along the opening (139).

3. Melting device (101) according to claim 2, **characterised in that** the opening (139) in the apparatus base (103) is formed continuously from one side, on which the radiant heater arm (121) is arranged, to an opposing side, so that the radiant heater arm (121) is horizontally movable by means of an operating element (141) on the opposing side.

4. Melting device (101) according to any one of the previous claims, **characterised in that** the radiant heater (127) is designed to be rotatable, pivotable and/or foldable on the radiant heater arm (121).

5. Melting device (101) according to any one of the previous claims, **characterised in that** the radiant heater arm (121) is arranged detachably on the displacement unit (137) .

6. Melting device (101) according to any one of the previous claims, **characterised in that** the radiant heater (127) has infrared radiation in a wavelength range from 1.40 um to 3.00 um, in particular from 1.50 um to 2.50 um, preferably 1.60 um to 1.80 um.

7. Melting device (101) according to any one of the previous claims, **characterised in that** the cheese carrier (107) is arranged on a base plate (105) of the housing base (103), wherein the base plate (105) can be rotated by 180°.

8. Melting device (101) according to any one of the previous claims, **characterised in that** the support unit (109) of the cheese carrier (107) has two lateral protective walls (111) .

9. Melting device (101) according to any one of the previous claims, **characterised in that** the cheese carrier (107) has a height adjustment device (115) for setting a height of the support unit (109).

## Revendications

1. Dispositif de fusion (101) pour faire fondre un fromage, le dispositif de fusion présentant un fond de boîtier (103), un support de fromage (107) avec une unité de pose (109) pour poser le fromage et un élément chauffant pour faire fondre le fromage, le support de fromage (107) et l'élément chauffant étant agencés sur le et/ou au niveau du fond de boîtier (103) et le support de fromage (107) étant fixé, le dispositif de fusion (101) présentant en tant qu'élément chauffant un bras à radiateur chauffant (121) avec un radiateur chauffant (127) de telle sorte que le bras à radiateur chauffant (121) avec le radiateur chauffant (127) peut être déplacé horizontalement sur le support de fromage (107) fixé au moyen d'une unité de déplacement (137), **caractérisé en ce que** le bras à radiateur chauffant (121) et le fond de boîtier (103) sont adaptés de telle sorte que le bras à radiateur chauffant (121) peut être déplacé horizontalement au moyen de l'unité de déplacement (137) sur et/ou dans le fond de boîtier (103).

2. Dispositif de fusion (101) selon la revendication 1, **caractérisé en ce que** l'unité de déplacement (137) présente un évidement (139) du fond de boîtier (103), de telle sorte que le bras à radiateur chauffant (121) peut être déplacé horizontalement le long de l'évidement (139).

3. Dispositif de fusion (101) selon la revendication 2, **caractérisé en ce que** l'évidement (139) dans le fond d'appareil (103) est réalisé de manière continue d'un côté sur lequel le bras à radiateur chauffant (121) est agencé à un côté opposé, de telle sorte que le bras à radiateur chauffant (121) peut être déplacé horizontalement au moyen d'un élément de commande (141) sur le côté opposé.

4. Dispositif de fusion (101) selon l'une quelconque des revendications précédentes, **caractérisé en ce que** le radiateur chauffant (127) est réalisé pour pouvoir tourner, pivoter et/ou être rabattu sur le bras à radiateur chauffant (121).

5. Dispositif de fusion (101) selon l'une quelconque des revendications précédentes, **caractérisé en ce que** le bras à radiateur chauffant (121) est agencé de manière amovible sur l'unité de déplacement (137).

6. Dispositif de fusion (101) selon l'une quelconque des revendications précédentes, **caractérisé en ce que** le radiateur chauffant (127) présente un rayonnement infrarouge dans une plage de longueurs d'onde de 1,40 µm à 3,00 µm, notamment de 1,50 µm à 2,50 µm, de préférence de 1,60 µm à 1,80 µm.

7. Dispositif de fusion (101) selon l'une quelconque des revendications précédentes, **caractérisé en ce que** le support de fromage (107) est agencé sur une plaque de base (105) du fond de boîtier (103), la plaque de base (105) pouvant tourner de 180°.

8. Dispositif de fusion (101) selon l'une quelconque des revendications précédentes, **caractérisé en ce que** l'unité de pose (109) du support de fromage (107) présente deux parois latérales de protection (111).

9. Dispositif de fusion (101) selon l'une quelconque des revendications précédentes, **caractérisé en ce que** le support de fromage (107) présente un dispositif de réglage en hauteur (115) pour régler une hauteur de l'unité de pose (109).
